# FASCICULE DE BREVET EUROPEEN

(11) **EP 1 867 437 B1**
(45) Date de publication et mention de la délivrance du brevet: **02.03.2011**
(21) Numéro de dépôt: 07356086.4
(22) Date de dépôt: 15.06.2007
(51) Int. Cl.: B25B 11/00

(54) **Dispositif de bridage magnétique, machine de moulage par injection équipée d'un tel dispositif et procédé de fabrication d'un tel dispositif**
Magnetische Halteplatte, Einspritzgießmaschine mit einer solchen Vorrichtung und Herstellungsverfahren einer solchen Vorrichtung
Magnetic clamping device, injection moulding machine equipped with such a device and method of manufacturing such a device

(30) Priorité: 16.06.2006 FR 0605380
(43) Date de publication de la demande: 19.12.2007
(73) Titulaire: STAUBLI FAVERGES, 74210 Faverges (FR)
(72) Inventeur: Tiberghien, Alain-Christophe, 74320 Sevrier (FR); Brun, Eric, 74210 Doussard (FR)
(74) Mandataire: Myon, Gérard Jean-Pierre

(56) Documents cités:
- WO-A-03/009972
- DE-U1- 20 001 927
- FR-A- 1 434 671
- US-B1- 6 489 871

## Description

La présente invention a trait à un dispositif de bridage magnétique, à une machine de moulage par injection comprenant un tel dispositif et à un procédé de fabrication d'un tel dispositif.

US-A-6,489,871 décrit une plaque de bridage magnétique comprenant des plots magnétiques susceptibles de générer un flux magnétique dans une pièce ferromagnétique destinée à être bridée contre cette plaque. La force de bridage exercée par la plaque sur la pièce peut être annulée en alimentant de manière adéquate un bobinage interne aux plots. Dans ce dispositif, les bobinages internes des plots sont reliés en série et connectés à une alimentation au moyen de fils de connexion, soudés ou sertis au niveau de chaque bobinage et placés dans des rainures de la plaque remplies de matériau isolant.

Par ailleurs, WO-A-03/009 972 décrit une plaque de bridage magnétique dans laquelle les plots comportent chacun un bobinage supplémentaire, destiné à mesurer le flux généré par chaque plot. Ces bobinages supplémentaires sont reliés en série et connectés à une unité de contrôle au moyen de fils de connexion qui, comme décrit précédemment, sont soudés ou sertis au niveau de chaque bobinage de mesure de flux et placés dans des rainures de la plaque.

L'établissement des connexions entre les différents bobinages des plots lors de la fabrication de telles plaques de bridage met en jeu un nombre élevé de pièces et requiert une main d'oeuvre très qualifiée. La mise en place des fils de connexion est une étape relativement longue dans le procédé de fabrication d'une plaque, puisqu'il est nécessaire de souder ou de sertir les fils au niveau de chaque bobinage puis d'insérer ces fils dans les rainures de la plaque. Il en résulte un temps et un coût importants de fabrication de ces plaques.

C'est à ces inconvénients qu'entend plus particulièrement remédier l'invention en proposant un dispositif de bridage magnétique ayant à la fois un coût de fabrication limité et un niveau de qualité élevé.

A cet effet, l'invention a pour objet un dispositif de bridage magnétique comprenant un support de bridage et au moins un plot magnétique logé dans ce support, chaque plot comportant un aimant commutable entre un état activé, dans lequel les lignes de flux magnétique générées par le plot peuvent s'étendre vers l'extérieur du dispositif de bridage, et un état désactivé, dans lequel les lignes de flux magnétique sont confinées dans le dispositif de bridage, chaque plot comportant au moins un bobinage, chaque extrémité de ce bobinage étant reliée à une borne, caractérisé en ce que les bornes d'au moins un plot sont reliées à un circuit au moyen de connecteurs amovibles.

Selon d'autres caractéristiques avantageuses de l'invention :
- chaque plot comporte un bobinage de mesure du flux magnétique généré par le plot, chaque extrémité du bobinage de mesure étant reliée à une borne de mesure, les bornes de mesure d'au moins un plot étant reliées à un circuit de mesure du flux magnétique au moyen de connecteurs amovibles ;
- le dispositif comprend des plots de référence dont les bornes de mesure sont reliées en série pour former un premier circuit de mesure de flux, les bornes de mesure des autres plots étant reliées en série pour former un deuxième circuit de mesure de flux, les bornes de mesure dans les premier et deuxième circuits de mesure étant reliées entre elles et à une unité de contrôle au moyen des connecteurs amovibles précités ;
- chaque plot comporte une borne de continuité et est relié à au moins un plot adjacent dans le support au moyen d'un des connecteurs précités, ce connecteur étant d'un premier type lorsqu'il relie deux plots de même nature parmi les plots de référence et les autres plots et d'un deuxième type lorsqu'il relie deux plots de natures différentes ;
- un connecteur du premier type relie entre elles des bornes de même nature parmi les bornes de mesure et les bornes de continuité de deux plots adjacents, alors qu'un connecteur du deuxième type relie entre elles des bornes de natures différentes de deux plots adjacents ;
- chaque plot comprend un aimant commutable comportant un aimant permanent entouré d'un bobinage de puissance, chaque extrémité du bobinage de puissance étant reliée à une borne de puissance, les bornes de puissance d'au moins un plot étant reliées à un circuit de puissance au moyen de connecteurs amovibles ;
- les connecteurs précités comportent au moins une prise munie de trois fiches de connexion respectivement à une borne de mesure, une borne de continuité et une borne de puissance d'un plot ;
- chaque borne d'un plot s'étend sur un secteur angulaire d'angle au sommet supérieur ou égal à 45°, chaque plot comportant au moins deux plages de connexion d'un connecteur qui s'étendent chacune sur un secteur angulaire d'angle au sommet supérieur ou égal à 45°, ce connecteur étant apte à être connecté simultanément avec trois bornes, respectivement de mesure, de continuité et de puissance, au niveau de chacune des plages de connexion ;
- la distance radiale relative entre les bornes de mesure et de puissance d'un plot, d'une part, et la distance radiale relative entre les bornes de puissance et de continuité, d'autre part, est constante dans chaque plage de connexion et identique d'une plage de connexion à une autre ;
- chaque plot comporte deux bornes de mesure et deux bornes de puissance semi-circulaires, la borne de continuité de chaque plot étant de forme circulaire et fermée, les bornes de mesure, de continuité et de puissance étant disposées de manière concentrique les unes par rapport aux autres ;
- chaque plot comporte une carcasse isolante cylindrique, cette carcasse comportant trois rainures circonférentielles concentriques de réception, respectivement, des bornes de mesure, de la borne de continuité et des bornes de puissance de ce plot ;
- les extrémités du bobinage de mesure sont reliées à chaque borne de mesure dans une zone médiane de celle-ci;
- le support comporte des logements de réception de plots et des logements de réception de connecteurs.

L'invention a également pour objet une machine de moulage par injection comprenant un dispositif de bridage magnétique tel que décrit ci-dessus.

Enfin, l'invention a pour objet un procédé de fabrication d'un dispositif de bridage magnétique tel que décrit ci-dessus, comprenant des étapes dans lesquelles :
- on insère des plots magnétiques dans des logements du support et on immobilise ces plots par rapport au support ; et
- on connecte les plots entre eux et à une unité de contrôle en insérant des connecteurs amovibles dans des logements du support, de manière à mettre en contact les fiches des connecteurs avec les bornes des plots.

Les caractéristiques et avantages de l'invention apparaîtront dans la description qui va suivre d'un mode de réalisation d'un dispositif de bridage magnétique selon l'invention, donnée à titre d'exemple et faite en se référant aux dessins annexés dans lesquels :
- la figure 1 est une vue partielle en perspective d'une machine de moulage par injection comprenant un dispositif de bridage magnétique conforme à l'invention ;
- la figure 2 est une vue de face à plus grande échelle de la face de bridage d'une plaque du dispositif de bridage magnétique visible à la figure 1, les connexions internes à la plaque étant représentées en traits forts ;
- la figure 3 est une coupe à plus grande échelle selon la ligne III-III de la figure 2 ;
- la figure 4 est une coupe à plus grande échelle selon la ligne IV-IV de la figure 2 ;
- la figure 5 est une vue à plus grande échelle du détail V de la figure 4;
- la figure 6 est un schéma de principe des différents circuits établis dans la plaque de la figure 2 ;
- la figure 7 est une vue en perspective éclatée et à plus grande échelle d'éléments constitutifs d'un plot magnétique de la plaque de la figure 2 ;
- la figure 8 est une vue en perspective et à plus grande échelle d'un connecteur de liaison entre deux plots magnétiques de la plaque de la figure 2 ;
- la figure 9 est une vue à plus grande échelle d'un connecteur de bout de circuit de la plaque de la figure 2 ;
- la figure 10 est une vue en perspective de la plaque de la figure 2, du côté de la face de bridage, préalablement à la mise en place des plots magnétiques et des organes de connexion ;
- la figure 11 est une vue analogue à la figure 10, du côté de la face arrière de la plaque de la figure 2.

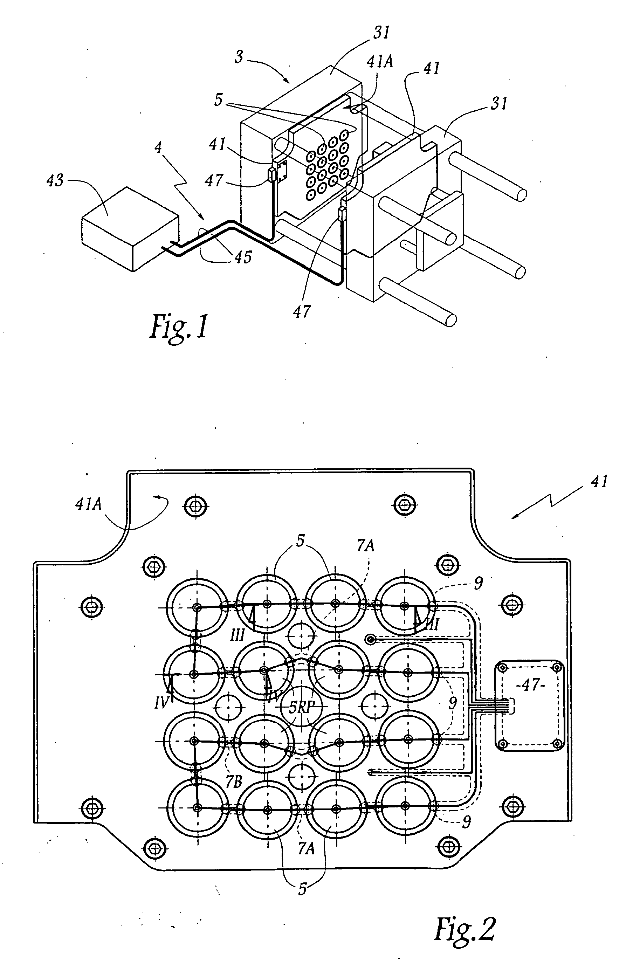

La machine 3 de moulage par injection représentée à la figure 1 comprend deux plateaux 31 de presse disposés en regard l'un de l'autre, l'un de ces plateaux 31 étant mobile en translation par rapport à l'autre. La machine 3 est équipée d'un dispositif 4 de bridage magnétique comprenant deux plaques 41 de bridage, fixées sur chaque plateau 31, au niveau des faces en regard de ces plateaux. Chaque plaque 41 comporte des plots magnétiques 5 logés dans la plaque et affleurant par rapport à une face 41A de bridage de la plaque. Le dispositif 4 comprend également une unité de contrôle 43, qui comporte notamment une alimentation, un circuit de commande et des circuits supplémentaires de traitement de signaux. L'unité de contrôle 43 est reliée à chaque plaque 41 au moyen d'un câble 45, connecté à la plaque au niveau d'un bornier 47. De plus, l'unité de contrôle 43 est reliée à la machine 3 au moyen d'un câble non représenté.

Un moule non représenté, constitué en matériau ferromagnétique, est destiné à être placé entre les deux plaques 41 et immobilisé contre ces plaques par bridage magnétique. Lorsqu'un moule est ainsi bridé entre les plaques 41, le mouvement de retrait du plateau 31 mobile entraîne l'ouverture du moule. L'unité de contrôle 43 contrôle à tout moment l'effort de bridage exercé par chaque plaque 41 sur la partie du moule correspondante.

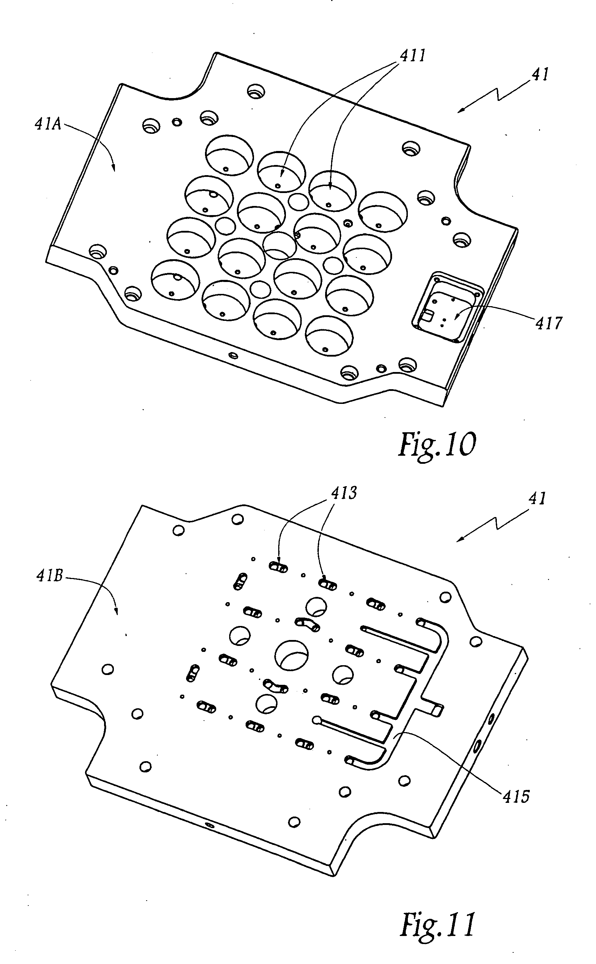

Comme visible à la figure 10, chaque plaque 41 du dispositif 4 comporte, au niveau de sa face 41A de bridage, des logements 411 de réception des plots magnétiques 5. Dans le mode de réalisation représenté, chaque plaque 41 comporte seize logements 411 globalement cylindriques, aptes à recevoir seize plots magnétiques 5 de forme sensiblement complémentaire des logements 411. Selon une variante non représentée de l'invention, le nombre de plots magnétiques 5 et de logements 411 correspondants d'une plaque 41 peut être différent de seize. La face 41A de chaque plaque 41 comporte également un logement 417 de réception d'un bornier 47.

Comme visible à la figure 11, chaque plaque 41 comporte, au niveau de sa face 41 B arrière, opposée à la face 41A de bridage, des logements 413 de réception de connecteurs 7A, 7B ou 9, destinés à relier électriquement les plots magnétiques 5 entre eux et au bornier 47. La face 41B de chaque plaque 41 comporte également des rainures 415, prévues pour le cheminement de fils de connexion entre des connecteurs 9 de bout de circuit et le bornier 47.

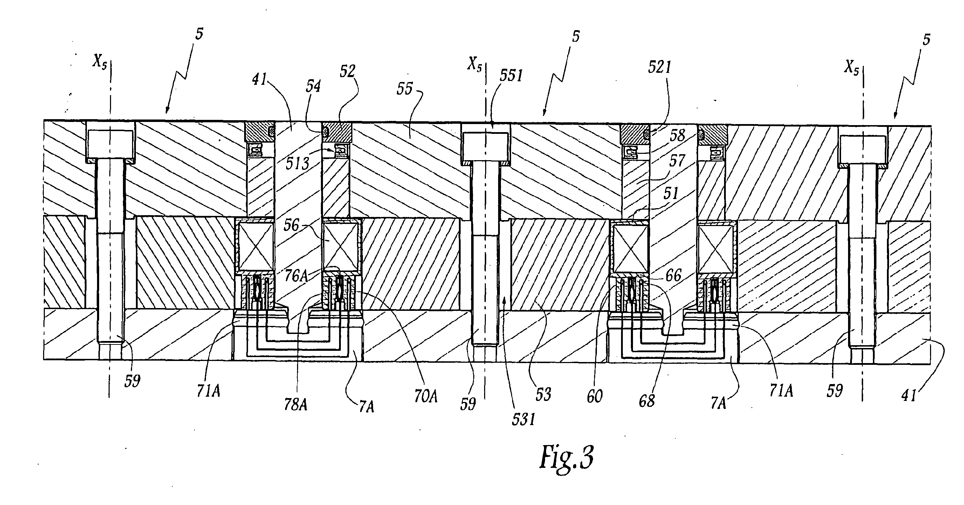

La structure de chaque plot magnétique 5 d'une plaque 41 est plus clairement visible sur la coupe de la figure 3. Chaque plot magnétique 5 est cylindrique avec un axe central X₅ de révolution. Chaque plot 5 comporte une carcasse 51, constituée en un matériau isolant, tel qu'une matière plastique, qui englobe au niveau de sa base un aimant permanent 53 globalement cylindrique. L'aimant 53 est constitué en un matériau faiblement coercitif, tel que de l'AlNiCo.

Un pôle externe 55, destiné à être affleurant par rapport à la face 41A de bridage de la plaque 41, est logé au-dessus de l'aimant 53. Le pôle 55 est constitué en un matériau ferromagnétique, tel que de l'acier. L'aimant 53 et le pôle acier 55 comportent chacun un alésage central 531 ou 551, destiné au passage d'une vis 59 de fixation du plot 5 sur la plaque 41. De manière avantageuse, le fond de chaque logement 411 comporte un taraudage, complémentaire d'un filet de la vis 59.

Le pôle externe 55 reçoit, le long de sa paroi latérale externe, des aimants permanents 57 de forme cylindrique, chaque aimant 57 étant polarisé radialement par rapport au plot 5. Plus précisément, chaque plot 5 comporte cinq aimants 57 en forme de portion d'anneau cylindrique, qui se logent dans des fenêtres 512 de la carcasse 51. Chaque aimant 57 est constitué en un matériau à aimantation permanente tel que du Néodyme Fer Bore ou un autre matériau magnétique hautement coercitif et est maintenu en place sur le pôle externe 55 ferromagnétique par attraction magnétique.

Un bobinage 56 de puissance est enroulé dans une rainure 511 périphérique externe de la carcasse 51 autour de l'aimant permanent 53. L'aimant 53 et le bobinage 56 forment ensemble un aimant commutable.

En l'absence de courant dans le bobinage 56 de puissance, les aimants du plot 5 génèrent un champ magnétique dont les lignes de flux peuvent s'étendre vers l'extérieur du plot 5. Lorsque les plots 5 d'une plaque 41 sont dans cet état dit activé, les lignes de flux sont susceptibles de se fermer en passant, depuis la plaque 41, vers un moule à brider, la plaque 41 exerçant alors un effort de bridage sur ce moule.

Lorsque le bobinage 56 de puissance est alimenté de manière adéquate, il génère un nouveau champ magnétique opposé au champ magnétique des aimants. On passe alors dans un état désactivé, dans lequel les lignes de flux sont confinées dans la plaque 41, l'effort de bridage exercé par la plaque 41 sur le moule étant alors nul.

Chaque plot 5 d'une plaque 41 comporte également une bague 52 constituée en un matériau amagnétique, tel que du laiton, et emmanchée autour du pôle acier 55. La bague 52 comporte une gorge périphérique externe 521, apte à recevoir un joint 54 torique garantissant l'étanchéité du plot 5 sur la face 41A de bridage de la plaque 41. De plus, chaque plot 5 comporte un bobinage 58, destiné à mesurer le flux généré par le plot 5, qui est enroulé dans une rainure 513 périphérique externe de la carcasse 51 autour du pôle acier 55, au voisinage de la bague 52. Une telle position du bobinage 58 de mesure permet d'accéder au flux total généré par le plot 5. Par combinaison des mesures de flux généré par chaque plot 5 d'une plaque 41 du dispositif 4, telle qu'exposée dans WO-A-03/009 972, il est possible de déterminer l'effort de bridage exercé par la plaque 41 sur un moule à brider.

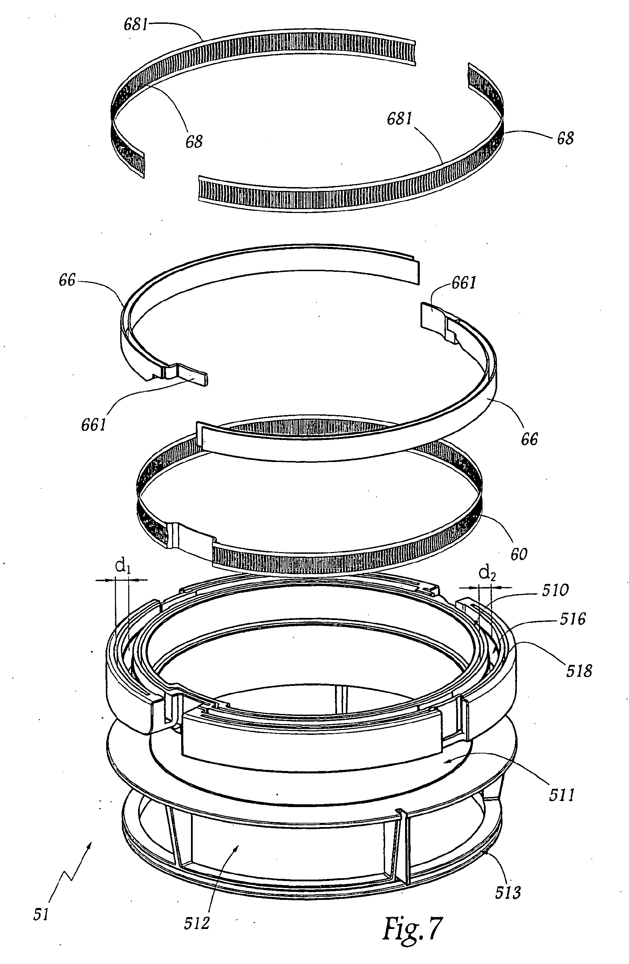

Au niveau de son extrémité opposée à la rainure 513, la carcasse 51 comporte trois rainures circonférentielles de réception de bornes de raccordement du plot 5. Comme visible à la figure 7, ces bornes comprennent une borne de continuité 60, deux bornes de puissance 66 et deux bornes de mesure 68. Chacune de ces bornes est constituée en un matériau conducteur.

La borne de continuité 60 est constituée d'une pièce unique et fermée, de forme circulaire et sensiblement complémentaire d'une première rainure 510 circonférentielle de la carcasse 51. Les deux bornes de puissance 66 sont chacune constituées d'une pièce semi-circulaire, s'étendant sensiblement sur 180°. Ces deux bornes 66 sont aptes à être reçues dans une deuxième rainure 516 circonférentielle de la carcasse 51, dans le prolongement l'une de l'autre. Enfin, les deux bornes de mesure 68 sont chacune constituées d'une pièce semi-circulaire, s'étendant sensiblement sur 180°. Les bornes 68 sont aptes à être reçues dans une troisième rainure 518 circonférentielle de la carcasse 51, dans le prolongement l'une de l'autre.

Chacune des bornes de continuité 60 et de mesure 68 est prévue pour présenter des lamelles de contact en vue d'un raccordement vers l'extérieur du plot 5. Les extrémités du bobinage 56 de puissance sont chacune soudées à une borne de puissance 66, au niveau d'une extrémité 661 de celle-ci. Les extrémités du bobinage 58 de mesure sont quant à elles chacune soudées dans une zone médiane 681 d'une borne de mesure 68.

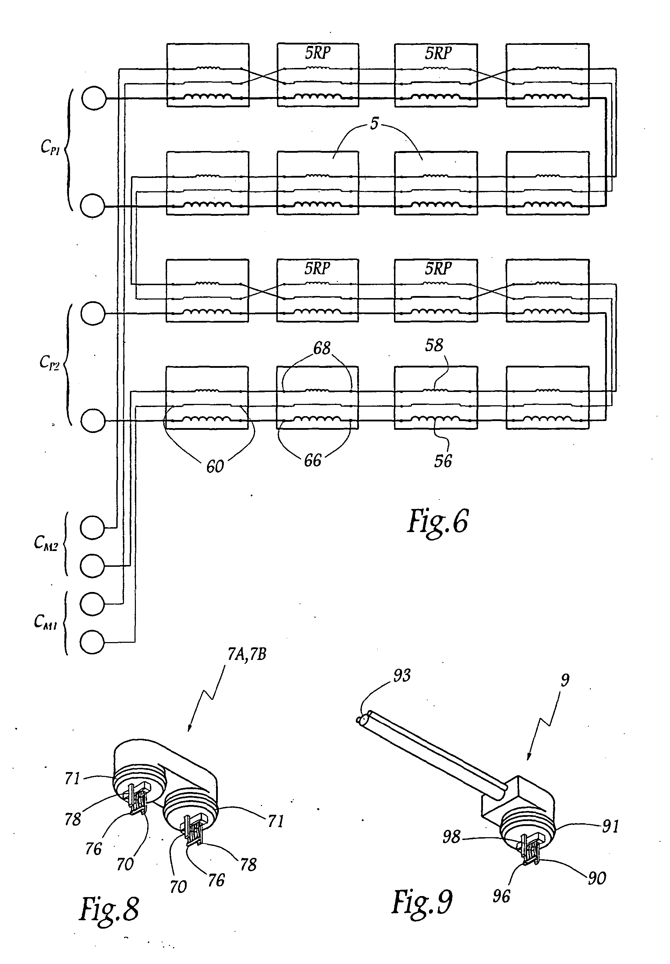

Les raccordements entre les différents plots 5 de chaque plaque 41 sont montrés à la figure 2 et sur le schéma de principe de la figure 6. Les bobinages 56 de puissance des plots 5 sont connectés en série selon deux groupes de huit bobinages, comme montré à la figure 6. Plus spécifiquement, chaque borne de puissance 66 d'un plot 5 est reliée à une borne de puissance 66 d'un plot 5 adjacent au moyen d'un connecteur 7A ou 7B amovible. Deux circuits C_{P1} et C_{P2} de puissance sont ainsi formés, chacun par association en série des bobinages 56 de puissance de huit plots 5. Les bornes de puissance 66 des plots 5 situés à l'extrémité de chaque circuit C_{P1} ou C_{P2} sont reliées au bornier 47 au moyen de connecteurs 9 de bout de circuit amovibles. Les circuits C_{P1} et C_{P2} sont ainsi aptes à être reliés à l'alimentation comprise dans l'unité de contrôle 43, via le câble 45 raccordé entre le bornier 47 et l'unité de contrôle 43.

Les bobinages 58 de mesure des plots 5 sont également connectés en série selon deux groupes distincts. D'une part, les bobinages 58 de quatre plots de référence 5RP sont connectés en série pour former un premier circuit C_{M1} de mesure de flux de référence. Les plots de référence 5RP sont choisis dans une zone centrale de la plaque 41 la plus susceptible d'être recouverte par un moule à brider. D'autre part, les bobinages 58 des douze autres plots 5 sont connectés en série pour former un deuxième circuit C_{M2} de mesure de flux. La mesure du flux des plots de référence est nécessaire pour pouvoir interpréter la mesure du flux combiné des autres plots et déterminer la valeur de l'effort de bridage exercé par chaque plaque 41 du dispositif 4 sur un moule à brider.

Chacun des circuits C_{M1} et C_{M2} est obtenu en reliant des bornes de mesure 68 ou de continuité 60 de plots 5 adjacents entre elles ou au bornier 47, au moyen de connecteurs 7A, 7B ou 9 amovibles.

Le circuit C_{M1} de mesure de flux de référence est formé en reliant en série les bornes de mesure 68 des quatre plots de référence 5RP, entre elles et avec les bornes de continuité 60 des douze autres plots 5, ce qui permet de court-circuiter les bobinages de mesure 58 de ces douze autres plots 5. Le deuxième circuit C_{M2} de mesure de flux est formé en reliant en série les bornes de mesure 68 des douze plots 5 standards, entre elles et avec les bornes de continuité 60 des quatre plots de référence 5RP, ce qui permet de court-circuiter les bobinages de mesure 58 de ces quatre plots de référence 5RP. En bout de chaque circuit C_{M1} et C_{M2}, les bornes adéquates parmi les bornes de continuité 60 et les bornes de mesure 68 des plots 5 situés en bout de circuit sont reliées au bornier 47 au moyen de connecteurs 9 de bout de circuit amovibles. Ainsi, chacun des circuits de mesure de flux C_{M1} et C_{M2} est apte à être connecté via un câble 45 à l'unité de contrôle 43.

L'unité de contrôle 43 comporte des circuits de traitement des signaux de mesure de flux issus des circuits C_{M1} et C_{M2}, en vue d'estimer l'effort de bridage exercé par la plaque 41 sur un moule à brider. Ces circuits de traitement peuvent notamment comprendre des circuits amplificateurs, intégrateurs et comparateurs, tels que décrits dans WO-A-03/009 972.

Comme visible sur la figure 2, un connecteur 7A ou 7B unique est prévu pour la connexion simultanée des trois bornes de puissance 66, de mesure 68 et de continuité 60 de deux plots 5 adjacents. Selon que les deux plots 5 adjacents sont ou ne sont pas de même nature parmi les plots de référence 5RP et les autres plots 5 standards, le connecteur utilisé pour relier les bornes de ces plots est d'un premier type 7A ou d'un deuxième type 7B.

Lorsque les deux plots 5 à connecter sont de même nature, par exemple deux plots de référence 5RP ou deux plots standards 5, la connexion est réalisée au moyen d'un connecteur 7A du premier type. Un tel connecteur 7A, plus particulièrement visible à la figure 3, est un connecteur double présentant à chacune de ses extrémités une prise 71A. Chaque prise 71A comporte trois fiches 76A, 78A et 70A, destinées chacune à être en contact avec une borne correspondante de puissance 66, de mesure 68 ou de continuité 60 d'un plot 5. Un connecteur 7A est prévu pour relier entre elles les bornes de même nature de chacun des deux plots 5 connectés au moyen de ce connecteur 7A. Plus précisément, comme représenté à la figure 3, un connecteur 7A relie une borne de puissance 66 d'un premier plot à une borne de puissance 66 du deuxième plot, une borne de mesure 68 du premier plot à une borne de mesure 68 du deuxième plot et la borne de continuité 60 du premier plot à la borne de continuité 60 du deuxième plot.

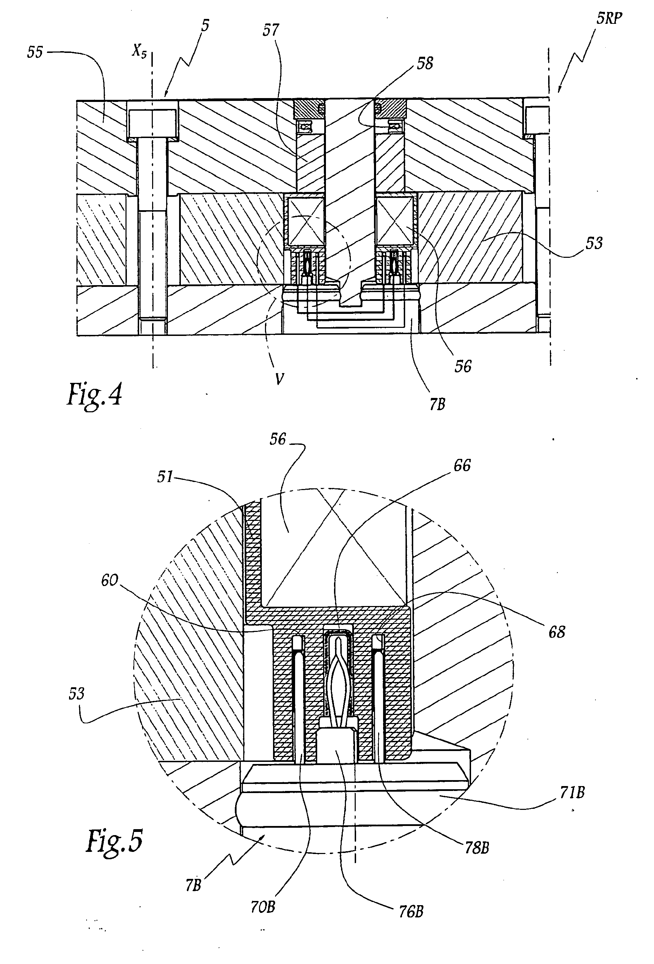

Lorsque les deux plots 5 à connecter sont de natures différentes, c'est-à-dire un plot de référence 5RP et un plot standard 5, la connexion est réalisée au moyen d'un connecteur 7B du deuxième type. Un tel connecteur 7B, plus particulièrement visible à la figure 4, est un connecteur double présentant à chacune de ses extrémités une prise 71 B. Chaque prise 71 B comporte trois fiches 76B, 78B et 70B destinées chacune, de manière analogue au connecteur 7A, à être en contact avec une borne correspondante d'un plot 5. Un connecteur 7B est prévu pour relier entre elles des bornes de puissance 66 des deux plots connectés au moyen de ce connecteur 7B, et pour relier une borne de mesure 68 d'un premier plot à la borne de continuité 60 du deuxième plot et inversement, comme représenté à la figure 4.

Ainsi, grâce aux deux types de connecteurs 7A et 7B, il est possible de former simultanément les deux circuits de puissance C_{P1} et C_{P2} et les deux circuits de mesure de flux C_{M1} et C_{M2}. Les connexions en bout de chacun de ces circuits sont réalisées au moyen d'un troisième type de connecteur 9 amovible, représenté à la figure 9. Un tel connecteur 9 est un connecteur simple présentant une prise unique 91, à partir de laquelle s'étend un fil 93 de longueur adaptable, dont l'extrémité dénudée est apte à être connectée au bornier 47. La prise 91 d'un connecteur 9 comporte trois fiches 96, 98 et 90, destinées chacune à être en contact avec une borne correspondante de puissance 66, de mesure 68 ou de continuité 60 d'un plot 5 situé à l'extrémité d'un circuit de puissance ou de mesure de flux.

Comme visible à la figure 5, les prises de connexion 71A, 71 B ou 91 des connecteurs 7A, 7B ou 9 assurent une étanchéité parfaite lors de leur mise en place au niveau des plots 5, sans opération supplémentaire au montage. Telles que représentées sur cette figure, les fiches 78 et 70 d'un connecteur 7, ou analogues d'un connecteur 9, destinées à être en contact avec une borne de mesure 68 ou de continuité 60 d'un plot 5, sont constituées de lames uniques. Chaque fiche 76 d'un connecteur 7, ou analogue d'un connecteur 9, destinée à être reliée avec une borne de puissance 66 d'un plot 5, est quant à elle constituée de lamelles de contact. Chaque borne de puissance 66 ayant une section en U, la fiche 76 à lamelles d'un connecteur 7, ou analogue d'un connecteur 9, assure un contact sur chaque branche du U.

Grâce à la forme circulaire ou semi-circulaire des bornes 60, 66 et 68 de chaque plot 5 et à leur disposition dans les rainures 510, 516 et 518 concentriques de la carcasse 51, un connecteur 7A, 7B ou 9 peut être relié simultanément à trois bornes de natures différentes d'un plot 5, à savoir la borne de continuité 60, une borne de puissance 66 et une borne de mesure 68, sur un secteur angulaire d'angle au sommet de l'ordre de 90°. En effet, chaque borne de mesure 68 et de puissance 66 d'un plot 5 s'étend sur un secteur angulaire d'angle au sommet de l'ordre de 180°. Les extrémités du bobinage 58 de mesure sont chacune soudées dans la zone médiane 681 d'une borne de mesure 68. La mise en place d'un connecteur n'est pas possible dans cette zone médiane 681 de chaque borne 68. Chaque plot 5 comporte alors quatre plages de connexion aptes à recevoir chacune un connecteur 7A, 7B ou 9, chaque plage de connexion s'étendant sur un secteur angulaire d'angle au sommet de l'ordre de 90°. En variante, chaque plage de connexion peut s'étendre sur un secteur angulaire d'angle au sommet différent de 90°, pour autant que cet angle au sommet soit supérieur ou égal à 45°.

Au niveau de chaque plage de connexion, un connecteur 7A, 7B ou 9 est apte à être connecté simultanément avec trois bornes de natures différentes. Lorsque les bornes 60, 66 et 68 sont en place respectivement dans les rainures 510, 516 et 518, la distance radiale d₁ entre chaque borne de mesure 68 et la borne de puissance 66 adjacente, d'une part, et la distance radiale d₂ entre chaque borne de puissance 66 et la borne de continuité 60, d'autre part, sont constantes dans chaque plage de connexion, c'est-à-dire sur un secteur angulaire d'angle au sommet de l'ordre de 90°. De plus, chacune de ces distances d₁ et d₂ est identique d'une plage de connexion à une autre, c'est-à-dire d'un secteur angulaire à un autre.

Un procédé de fabrication d'une plaque 41 d'un dispositif 4 de bridage magnétique conforme à l'invention comprend des étapes dans lesquelles :

Tout d'abord, on insère, depuis la face 41A de bridage de la plaque 41, les seize plots 5 dans les logements 411 de la plaque 41 et on immobilise ces plots 5 par rapport à la plaque 41 au moyen des vis 59 de fixation. On insère également le bornier 47 dans le logement 417 de la plaque 41 prévu à cet effet.

Ensuite, on réalise les connexions entre les plots 5 pour former les deux circuits de puissance C_{P1} et C_{P2} et les deux circuits de mesure de flux C_{M1} et C_{M2}. Les connexions sont réalisées entre les plots 5 par la mise en place des connecteurs 7A et 7B dans les logements 713 de la plaque 41, prévus à cet effet à cheval entre deux logements 411 de plots 5 et accessibles depuis la face arrière 41 B opposée à la face 41A de bridage. De plus, des connecteurs 9 de bout de circuit sont disposés dans les logements 413 adjacents aux plots 5 situés à l'extrémité des circuits et les fils 93 de connexion débouchant de ces connecteurs 9 sont placés dans les rainures 415 de la plaque 41 et acheminés vers le bornier 47.

Dans le mode de réalisation représenté, les circuits de mesure de flux C_{M1} et C_{M2} sont chacun constitués de deux groupes de huit plots 5. Entre les couples de plots 5 adjacents de chaque groupe, sept connecteurs de type 7A ou 7B sont mis en place. Les plots 5 de chaque groupe situés au voisinage du bornier 47 reçoivent chacun un connecteur de type 9, dont le fil 93 de connexion est raccordé au bornier 47 qui abrite les connexions nécessaires pour mettre en série l'un avec l'autre les circuits des deux groupes de huit plots 5.

Enfin, un câble 45 est connecté entre le bornier 47 et l'unité de contrôle 43 du dispositif 4.

Un dispositif 4 de bridage magnétique conforme à l'invention a l'avantage de limiter le nombre de pièces mises en jeu lors de sa fabrication et de permettre une connexion aisée entre les plots 5, grâce aux connecteurs amovibles 7A, 7B ou 9. Ces trois types de connecteurs permettent de connecter les plots 5 en série de manière aisée et uniforme pour tous les plots 5, ce qui diminue la complexité des connexions et le temps de fabrication de la plaque 41 de bridage. La connexion des plots 5 entre eux est amovible, étanche et ne nécessite aucune soudure ou sertissage. Ainsi, le temps et le coût de fabrication d'une plaque 41 d'un dispositif 4 selon l'invention et limité, avec un niveau de qualité élevé du dispositif obtenu.

Par ailleurs, les plots 5 ont tous un encombrement et une interface de connexion identiques. Chaque plot 5 est cylindrique, ce qui laisse une liberté d'orientation du plot 5 dans son logement 411. Chaque plot 5 est destiné à recevoir deux connecteurs qui peuvent se connecter avec une distance angulaire relative variable, comprise entre environ 20° et 180°. En d'autres termes, la connexion d'un plot 5 est configurable en position. A titre d'exemple, dans le mode de réalisation représenté, la zone angulaire de connexion de chaque plot 5 est exploitée pour faire varier les positions relatives des entrées et des sorties de chaque plot 5. En effet, dans une même rangée de plots 5, l'entrée et la sortie sont placées à environ 180° l'une par rapport à l'autre, alors que la connexion de deux plots de rangées différentes met en jeu une entrée et une sortie placées à environ 90° l'une par rapport à l'autre. Cette possibilité de connecter un plot 5 dans une large zone angulaire permet d'optimiser le placement des pôles de chaque plot magnétique 5 et ainsi de maximiser le rendement magnétique de chaque plaque 41 du dispositif 4.

La face 41A de bridage de chaque plaque 41 peut être usinée pour garantir une bonne planéité. Grâce aux joints 54 d'étanchéité contenus dans les gorges des bagues 52 de fermeture des plots 5, cet usinage peut se faire sans risque de détérioration des composants internes des plots 5.

L'invention n'est pas limitée à l'exemple décrit et représenté. En particulier, dans le cadre du mode de réalisation décrit, les connecteurs 7A et 7B présentent tous un écartement identique de leurs prises 71. En variante, l'écartement des prises 71 de ces connecteurs peut être différent d'un connecteur à un autre. En outre, selon une variante non représentée de l'invention, la bobine 58 de mesure de chaque plot 5 peut entourer la bobine 56 de puissance de ce plot, au lieu d'être disposée au sommet du plot.

Selon une autre variante non représentée de l'invention, seuls les circuits de mesure de flux C_{M1} et C_{M2} peuvent mettre en jeu des connecteurs 7A, 7B et 9 amovibles selon l'invention, les circuits de puissance C_{P1} et C_{P2} étant alors câblés de manière traditionnelle, c'est-à-dire avec les fils de connexion soudés ou sertis au niveau des bobinages 56 de puissance de chaque plot 5 et placés dans des rainures de la plaque 41. Dans cette variante, il n'est pas nécessaire de prévoir des bornes de puissance 66 pour les plots 5.

Selon encore une autre variante non représentée de l'invention, chaque plot 5 peut ne comporter qu'un bobinage 56 de puissance et aucun bobinage de mesure. Dans ce cas, seul le ou les circuits de puissance C_{P1} et C_{P2} sont réalisés au moyen des connecteurs 7A, 7B et 9 amovibles.

Le dispositif 4 de bridage magnétique selon l'invention a été décrit dans le cadre d'une machine de moulage par injection. Cependant, un tel dispositif 4 est transposable dans de nombreuses autres applications, et notamment pour des installations industrielles nécessitant le bridage de pièces avec un effort important, réversible et contrôlé.

## Revendications

1. Dispositif (4) de bridage magnétique comprenant un support (41) de bridage et au moins un plot magnétique (5) logé dans ce support, chaque plot (5) comportant un aimant commutable (53, 56) entre un état activé, dans lequel les lignes de flux magnétique générées par le plot peuvent s'étendre vers l'extérieur du dispositif de bridage, et un état désactivé, dans lequel les lignes de flux magnétique sont confinées dans le dispositif de bridage, chaque plot (5) comportant au moins un bobinage (58, 56), chaque extrémité de ce bobinage étant reliée à une borne (68, 66), **caractérisé en ce que** les bornes (68, 66) d'au moins un plot (5) sont reliées à un circuit (C_{M1}, C_{M2}, C_{P1}, C_{P2}) au moyen de connecteurs (7A, 7B, 9) amovibles.

2. Dispositif de bridage magnétique selon la revendication 1, **caractérisé en ce que** chaque plot (5) comporte un bobinage (58) de mesure du flux magnétique généré par le plot, chaque extrémité du bobinage de mesure étant reliée à une borne de mesure (68), les bornes de mesure (68) d'au moins un plot (5) étant reliées à un circuit (C_{M1}, C_{M2}) de mesure du flux magnétique au moyen de connecteurs (7A, 7B, 9) amovibles.

3. Dispositif de bridage magnétique.selon la revendication 2, **caractérisé en ce qu'**il comprend des plots de référence (5RP) dont les bornes de mesure (68) sont reliées en série pour former un premier circuit (C_{M1}) de mesure de flux, les bornes de mesure (68) des autres plots (5) étant reliées en série pour former un deuxième circuit (C_{M2}) de mesure de flux, les bornes de mesure (68) dans les premier (C_{M1}) et deuxième (C_{M2}) circuits de mesure étant reliées entre elles et à une unité de contrôle (43) au moyen desdits connecteurs (7A, 7B, 9) amovibles.

4. Dispositif de bridage magnétique selon la revendication 3, **caractérisé en ce que** chaque plot (5) comporte une borne de continuité (60) et est relié à au moins un plot adjacent dans le support (41) au moyen d'un desdits connecteurs (7A, 7B), ce connecteur étant d'un premier type (7A) lorsqu'il relie deux plots de même nature parmi les plots de référence (5RP) et les autres plots (5) et d'un deuxième type (7B) lorsqu'il relie deux plots de natures différentes.

5. Dispositif de bridage magnétique selon la revendication 4, **caractérisé en ce qu'**un connecteur (7A) dudit premier type relie entre elles des bornes de même nature parmi les bornes de mesure (68) et les bornes de continuité (60) de deux plots (5) adjacents, alors qu'un connecteur (7B) dudit deuxième type relie entre elles des bornes (60, 68) de natures différentes de deux plots adjacents.

6. Dispositif de bridage magnétique selon l'une quelconque des revendications précédentes, **caractérisé en ce que** chaque plot (5) comprend un aimant commutable (53, 56) comportant un aimant permanent (53) entouré d'un bobinage (56) de puissance, chaque extrémité du bobinage de puissance étant reliée à une borne de puissance (66), les bornes de puissance (66) d'au moins un plot étant reliées à un circuit (C_{P1}, C_{P2}) de puissance au moyen de connecteurs (7A, 7B, 9) amovibles.

7. Dispositif de bridage magnétique selon les revendications 4 et 6, **caractérisé en ce que** lesdits connecteurs (7A, 7B, 9) comportent au moins une prise (71A, 71B, 91) munie de trois fiches (78A, 70A, 76A, 78B, 70B, 76B, 98, 90, 96) de connexion respectivement à une borne de mesure (68), une borne de continuité (60) et une borne de puissance (66) d'un plot (5).

8. Dispositif de bridage magnétique selon les revendications 4 et 6, **caractérisé en ce que** chaque borne (68, 60, 66) d'un plot (5) s'étend sur un secteur angulaire d'angle au sommet supérieur ou égal à 45°, chaque plot (5) comportant au moins deux plages de connexion d'un connecteur (7A, 7B, 9) qui s'étendent chacune sur un secteur angulaire d'angle au sommet supérieur ou égal à 45°, ledit connecteur (7A, 7B; 9) étant apte à être connecté simultanément avec trois bornes, respectivement de mesure (68), de continuité (60) et de puissance (66), au niveau de chacune desdites plages de connexion.

9. Dispositif de bridage magnétique selon la revendication 8, **caractérisé en ce que** la distance radiale (d₁) relative entre les bornes de mesure (68) et de puissance (66) d'un plot (5), d'une part, et la distance radiale (d₂) relative entre les bornes de puissance (66) et de continuité (60), d'autre part, est constante dans chaque plage de connexion et identique d'une plage de connexion à une autre.

10. Dispositif de bridage magnétique selon les revendications 4 et 6, **caractérisé en ce que** chaque plot (5) comporte deux bornes de mesure (68) et deux bornes de puissance (66) semi-circulaires, la borne de continuité (60) de chaque plot (5) étant de forme circulaire et fermée, les bornes de mesure (68), de continuité (60) et de puissance (66) étant disposées de manière concentrique les unes par rapport aux autres.

11. Dispositif de bridage magnétique selon la revendication 10, **caractérisé en ce que** chaque plot (5) comporte une carcasse (51) isolante cylindrique, cette carcasse comportant trois rainures circonférentielles (518, 510, 516) concentriques de réception, respectivement, des bornes de mesure (68), de la borne de continuité (60) et des bornes de puissances (66) dudit plot.

12. Dispositif de bridage magnétique selon la revendication 10, **caractérisé en ce que** les extrémités du bobinage (58) de mesure sont reliées à chaque borne de mesure (68) dans une zone médiane (681) de celle-ci.

13. Dispositif de bridage magnétique selon l'une quelconque des revendications précédentes, **caractérisé en ce que** le support (41) comporte des logements (411) de réception de plots (5) et des logements (413) de réception de connecteurs (7A, 7B, 9).

14. Machine de moulage par injection, **caractérisée en ce qu'**elle comprend un dispositif (4) de bridage magnétique selon l'une quelconque des revendications précédentes.

15. Procédé de fabrication d'un dispositif (4) de bridage magnétique selon l'une quelconque des revendications 1 à 13, **caractérisé en ce qu'**il comprend des étapes dans lesquelles :
a) on insère des plots (5) dans des logements (411) du support (41) et on immobilise ces plots par rapport au support ;
b) on connecte les plots (5) entre eux et à une unité de contrôle (43) en insérant des connecteurs (7A, 7B, 9) amovibles dans des logements (413) du support (41), de manière à mettre en contact les fiches des connecteurs avec les bornes (68, 60, 66) des plots.

## Claims

1. Magnetic clamping device (4) comprising a clamping support (41) and at least one magnetic pad (5) housed in this support, each pad (5) comprising a magnet (53, 56) that can be switched between an activated state, in which the magnetic flux lines generated by the pad may extend towards the outside of the clamping device, and a deactivated state, in which the magnetic flux lines are confined in the clamping device, each pad (5) comprising at least one solenoid coil (58, 56), each end of this solenoid coil being connected to a terminal (68, 66), wherein the terminals (68, 66) of at least one pad (5) are connected to a circuit (C_{M1}, C_{M2}, C_{P1}, C_{P2}) by means of removable connectors (7A, 7B, 9).

2. Magnetic clamping device according to Claim 1, wherein each pad (5) comprises a solenoid coil (58) for measuring the magnetic flux generated by the pad, each end of the measurement solenoid coil being connected to a measurement terminal (68), the measurement terminals (68) of at least one pad (5) being connected to a magnetic flux measurement circuit (C_{M1}, C_{M2}) by means of removable connectors (7A, 7B, 9).

3. Magnetic clamping device according to Claim 2, comprising reference pads (5RP) whose measurement terminals (58) are connected in series to form a first flux measurement circuit (C_{M1}), the measurement terminals (68) of the other pads (5) being connected in series to form a second flux measurement circuit (C_{M2}), the measurement terminals (68) in the first (C_{M1}) and second (C_{M2}) measurement circuits being connected to one another and to a control unit (43) by means of the said removable connectors (7A, 7B, 9).

4. Magnetic clamping device according to Claim 3, wherein each pad (5) comprises a continuity terminal (60) and is connected to at least one adjacent pad in the support (41) by means of one of the said connectors (7A, 7B), this connector being of a first type (7A) when it connects two pads of the same kind amongst the reference pads (5RP) and the other pads (5), and of a second type (7B) when it connects two pads of different kinds.

5. Magnetic clamping device according to Claim 4, wherein a connector (7A) of the said first type connects together terminals of the same kind amongst the measurement terminals (68) and the continuity terminals (60) of two adjacent pads (5), while a connector (7B) of the said second type connects together terminals (60, 68) of different kinds of two adjacent pads.

6. Magnetic clamping device according to one of the previous claims, wherein each pad (5) comprises a switchable magnet (53, 56) comprising a permanent magnet (53) surrounded by a power solenoid coil (56), each end of the power solenoid coil being connected to a power terminal (66), the power terminals (66) of at least one pad being connected to a power circuit (C_{P1}, C_{P2}) by means of removable connectors (7A, 7B, 9).

7. Magnetic clamping device according to Claims 4 and 6, wherein the said connectors (7A, 7B, 9) comprise at least one plug (71A, 71B, 91) equipped with three pins (78A, 70A, 76A, 78B, 70B, 76B, 98, 90, 96) for connection respectively to a measurement terminal (68), a continuity terminal (60) and a power terminal (66) of a pad (5).

8. Magnetic clamping device according to Claims 4 and 6, wherein each terminal (68, 60, 66) of a pad (5) extends over an angular sector with an apex angle greater than or equal to 45°, each pad (5) comprising at least two connection portions for connecting a connector (7A, 7B, 9), each connection portion extending over an angular sector with an apex angle greater than or equal to 45°, the said connector (7A, 7B; 9) being capable of being connected simultaneously to three terminals, respectively a measurement terminal (68), a continuity terminal (60) and a power terminal (66), on each of said connection portions.

9. Magnetic clamping device according to Claim 8, wherein the relative radial distance (d₁) between the measurement terminals (68) and power terminals (66) of a pad (5) on the one hand, and the relative radial distance (d₂) between the power terminals (66) and continuity terminal (60), on the other hand, is constant in each connection portion and identical from one connection portion to another.

10. Magnetic clamping device according to Claims 4 and 6, wherein each pad (5) comprises two semicircular measurement terminals (68) and two semicircular power terminals (66), the continuity terminal (60) of each pad (5) being of circular shape and closed, the measurement terminals (68), continuity terminal (60) and power terminals (66) being placed concentrically relative to one another.

11. Magnetic clamping device according to Claim 10, wherein each pad (5) comprises a cylindrical insulating casing (51), this casing comprising three concentric circumferential grooves (518, 510, 516) for receiving, respectively, the measurement terminals (68), the continuity terminal (60) and the power terminals (66) of the said pad.

12. Magnetic clamping device according to Claim 10, wherein the ends of the measurement solenoid coil (58) are connected to each measurement terminal (68) in a mid-zone (681) of the latter.

13. Magnetic clamping device according to Claim 1, wherein the support (41) comprises housings (411) for receiving pads (5) and housings (413) for receiving connectors (7A, 7B, 9).

14. Injection moulding machine, comprising a magnetic clamping device (4) according to one of the previous claims.

15. Method for manufacturing a magnetic clamping device (4) according to one of claims 1 to 13, wherein said method comprises the steps of :
a) inserting pads (5) into housings (411) of the support (41) and immobilizing these pads relative to the support;
b) connecting the pads (5) to one another and to a control unit (43) by inserting removable connectors (7A, 7B, 9) into housings (413) of the support (41) in such a way as to place the connector pins in contact with the terminals (68, 60, 66) of the pads.

## Patentansprüche

1. Magnetische Spannvorrichtung (4), einen Spannträger (41) und mindestens ein Magnetelement (5), das in diesem Träger aufgenommen ist, umfassend, wobei jedes Magnetelement (5) einen Magneten (53, 56) aufweist, der zwischen einem aktivierten Zustand, in dem die von dem Magnetelement erzeugten Magnetflusslinien sich nach außen in Bezug auf die Spannvorrichtung erstrecken können, und einem deaktivierten Zustand, in dem die Magnetflusslinien in der Spannvorrichtung eingeschlossen sind, umschaltbar ist, und wobei jedes Magnetelement (5) mindestens eine Wicklung (58, 56) aufweist und jedes Ende dieser Wicklung mit einer Klemme (68, 66) verbunden ist, **dadurch gekennzeichnet, dass** die Klemmen (68, 66) mindestens eines Magnetelements (5) mit einem Schaltkreis (C_{M1}, C_{M2}, C_{P1}, C_{P2}) mittels lösbarer Verbindungselemente (7A, 7B, 9) verbunden sind.

2. Magnetische Spannvorrichtung nach Anspruch 1, **dadurch gekennzeichnet, dass** jedes Magnetelement (5) eine Wicklung (58) zum Messen des von dem Magnetelement erzeugten Magnetflusses aufweist, wobei jedes Ende der Messwicklung mit einer Messklemme (68) verbunden ist und die Messklemmen (68) mindestens eines Magnetelements (5) mit einem Schaltkreis (C_{M1}, C_{M2}) zur Messung des Magnetflusses mittels der lösbaren Verbindungselemente (7A, 7B, 9) verbunden sind.

3. Magnetische Spannvorrichtung nach Anspruch 2, **dadurch gekennzeichnet, dass** sie Referenzmagnetelemente (5RP) umfasst, deren Messklemmen (68) in Reihe miteinander verbunden sind, um einen ersten Schaltkreis (C_{M1}) zur Messung des Flusses zu bilden, wobei die Messklemmen (68) der anderen Magnetelemente (59) in Reihe miteinander verbunden sind, um einen zweiten Schaltkreis (C_{M2}) zur Messung des Flusses zu bilden und die Messklemmen (68) in dem ersten (C_{M1}) und dem zweiten (C_{M2}) Messkreis untereinander und mit einer Steuereinheit (43) mittels der lösbaren Verbindungselemente (7A, 7B, 9) verbunden sind.

4. Magnetische Spannvorrichtung nach Anspruch 3, **dadurch gekennzeichnet, dass** jedes Magnetelement (5) eine Durchgangsklemme (60) aufweist und mit mindestens einem benachbarten Magnetelement in dem Träger (41) mittels eines der Verbindungselemente verbunden ist, wobei dieses Verbindungselement (7A, 7B) von einer ersten Art (7A) ist, wenn es zwei Magnetelemente derselben Natur unter den Referenzmagnetelementen (5RP) und den anderen Magnetelementen (5) verbindet, und von einer zweiten Art (7B) ist, wenn es zwei Magnetelemente unterschiedlicher Natur verbindet.

5. Magnetische Spannvorrichtung nach Anspruch 4, **dadurch gekennzeichnet, dass** ein Verbindungselement (7A) der ersten Art die Klemmen gleicher Art unter den Messklemmen (68) und den Durchgangsklemmen (60) von zwei benachbarten Magnetelementen (5) untereinander verbindet, während ein Verbindungselement (7B) der zweiten Art die Klemmen (60, 68) unterschiedlicher Natur von zwei benachbarten Magnetelementen untereinander verbindet.

6. Magnetische Spannvorrichtung nach einem beliebigen der vorhergehenden Ansprüche, **dadurch gekennzeichnet, dass** jedes Magnetelement (5) einen Schaltmagneten (53, 56) umfasst, der einen von einer Leistungswicklung (56) umgebenen Permanentmagneten (53) aufweist, wobei jedes Ende der Leistungswicklung mit einer Leistungsklemme (66) verbunden ist, wobei die Leistungsklemmen (66) mindestens eines Magnetelements mit einem Leistungskreis (C_{P1}, C_{P2}) mittels lösbarer Verbindungselemente (7A, 7B, 9) verbunden sind.

7. Magnetische Spannvorrichtung nach den Ansprüchen 4 und 6, **dadurch gekennzeichnet, dass** die Verbindungselemente (7A, 7B, 9) mindestens einen Stecker (71A, 71B, 91) umfasst, der mit drei Steckelementen (78A, 70A, 76A, 78B, 70B, 76B, 98, 90, 96) jeweils zur Verbindung mit einer Messklemme (68), einer Durchgangsklemme (60) und einer Leistungsklemme (66) des Magnetelements (5) ausgerüstet ist.

8. Magnetische Spannvorrichtung nach den Ansprüchen 4 und 6, **dadurch gekennzeichnet, dass** jede Klemme (68, 60, 66) eines Magnetelements (5) sich über einen Winkelsektor mit einem Spitzenwinkel in einem größer oder gleich 45° erstreckt, wobei jedes Magnetelement (5) mindestens zwei Verbindungsbereiche eines Verbindungselements (7A, 7B, 9) umfasst, die sich jeder über einen Winkelsektor mit einem Spitzenwinkel größer oder gleich 45° erstreckt, wobei das Verbindungselement (7A, 7B, 9) geeignet ist, gleichzeitig mit drei Klemmen, der Messklemme (68), der Durchgangsklemme (60) und der Leistungsklemme (66) an jedem der Verbindungsbereiche verbunden zu werden.

9. Magnetische Spannvorrichtung nach Anspruch 8, **dadurch gekennzeichnet, dass** der relative radiale Abstand (d₁) zwischen der Messklemme (68) und der Leistungsklemme (66) eines Magnetelements (5) einerseits und der relative radiale Abstand (d₂) zwischen der Leistungsklemme (66) und der Durchgangsklemme (60) andererseits in jedem Verbindungsbereich konstant und identisch bezüglich eines Verbindungsbereichs zu einem anderen ist.

10. Magnetische Spannvorrichtung nach den Ansprüchen 4 und 6, **dadurch gekennzeichnet, dass** jedes Magnetelement (5) zwei halbkreisförmige Messklemmen (68) und Leistungsklemmen (66) umfasst, wobei die Durchgangsklemme (60) jedes Magnetelements (5) eine Kreis- und geschlossene Form aufweist, wobei die Mess- (68), Durchgangs- (60) und Leistungsklemmen (66) zueinander konzentrisch angeordnet sind.

11. Magnetische Spannvorrichtung nach Anspruch 10, **dadurch gekennzeichnet, dass** jedes Magnetelement (5) ein isolierendes zylindrisches Gehäuse (51) aufweist, wobei dieses Gehäuse drei konzentrische Umfangsnuten (518, 510, 516) zur Aufnahme jeweils der Messklemmen (68), der Durchgangsklemme (60) und der Leistungsklemmen (66) des Magnetelements aufweist.

12. Magnetische Spannvorrichtung nach Anspruch 10, **dadurch gekennzeichnet, dass** die Enden der MessWicklung (58) mit jeder Messklemme (68) in einer Mittelzone (681) derselben verbunden ist.

13. Magnetische Spannvorrichtung nach einem beliebigen der vorhergehenden Ansprüche, **dadurch gekennzeichnet, dass** der Träger (41) Aufnahmeräume (41) zur Aufnahme der Magnetelemente (5) und Aufnahmeräume (413) zur Aufnahme der Verbindungselemente (7A, 7B, 9) aufweist.

14. Spritzgussmaschine, **dadurch gekennzeichnet, dass** sie eine magnetische Spannvorrichtung (4) nach einem beliebigen der vorhergehenden Ansprüche umfasst.

15. Verfahren zur Herstellung einer magnetischen Spannvorrichtung (4) nach einem beliebigen der Ansprüche 1 bis 13, **dadurch gekennzeichnet, dass** es Schritte umfasst, bei denen:
a) man Magnetelemente (5) in Aufnahmeräume (411) des Trägers (41) einführt und diese Magnetelemente in Bezug auf den Träger festlegt;
b) man die Magnetelemente (5) untereinander und mit einer Steuereinheit (43) verbindet, indem lösbare Verbindungselemente (7A, 7B, 9) in Aufnahmeräume (413) des Trägers (41) eingeführt werden, derart, dass die Steckelemente der Verbindungselemente mit den Klemmen (68, 60, 66) der Magnetelemente in Kontakt gebracht werden.
